# EUROPEAN PATENT APPLICATION

(11) **EP 4 714 682 A1**
(43) Date of publication of application: **25.03.2026**
(21) Application number: 24891000.2
(22) Date of filing: 24.06.2024
(51) Int. Cl.: B60C 11/12, B60C 11/03, B60C 11/13

(54) **TIRE**

(30) Priority: 16.11.2023 JP 2023195082
(71) Applicant: BRIDGESTONE CORPORATION, Chuo-ku Tokyo 104-8340 (JP)
(72) Inventor: UOZUMI, Shinichi, Tokyo 104-8340 (JP); SASAKI, Yoshiyuki, Tokyo 104-8340 (JP); WATANABE, Takeshi, Tokyo 104-8340 (JP); KAJI, Yoshio, Tokyo 104-8340 (JP)
(74) Representative: Marks & Clerk LLP
(86) International application number: PCT/JP2024/022898
(87) International publication number: WO 2025/104955

(57) **Abstract**

The tire includes a plurality of first shallow grooves, each having a groove depth smaller than a sipe depth of a first sipe and a sipe depth of a second sipe, extending in a first direction and intersecting the second sipe, and a plurality of second shallow grooves, each having a groove depth smaller than the sipe depth of the first sipe and the sipe depth of the second sipe, extending in a second direction and intersecting the first sipe.

## Description

### TECHNICAL FIELD

The present disclosure relates to a tire.

### BACKGROUND

Conventionally, as a winter tire, a tire has been proposed in which a block is provided with a plurality of sipes and a plurality of shallow grooves having a depth shallower than the sipes (for example, Patent Literature (PTL) 1). According to such a tire, the shallow grooves remove a water film, thereby ensuring on-snow performance when new.

### CITATION LIST

### Patent Literature

PTL 1: JP 2004-034903 A

### SUMMARY

### (Technical Problem)

In the above-described technology, there has been room for improvement in enhancing ice-on grip performance.

Therefore, the present disclosure aims to provide a pneumatic tire with improved ice-on grip performance.

### (Solution to Problem)

The gist configuration of the present disclosure is as follows.
(1) A tire provided with a land portion partitioned by a first circumferential groove extending in a tire circumferential direction and a second circumferential groove extending in the tire circumferential direction,
   wherein the land portion is provided with:
   a first inclined width direction groove extending in a first direction inclined with respect to a tire width direction,
   a second inclined width direction groove extending in a second direction inclined in the opposite direction to the first inclined width direction groove with respect to the tire width direction,
   a first sipe extending in the first direction, and a second sipe extending in the second direction,
   wherein, in the tire circumferential direction, the first inclined width direction groove, a plurality of the first sipes, the second inclined width direction groove, and a plurality of the second sipes are repeatedly formed,
   a plurality of first shallow grooves, each having a groove depth smaller than a sipe depth of the first sipe and a sipe depth of the second sipe, extending in the first direction and intersecting the second sipe, and
   a plurality of second shallow grooves, each having a groove depth smaller than the sipe depth of the first sipe and the sipe depth of the second sipe, extending in the second direction and intersecting the first sipe, are further provided.

In the present specification, the "first circumferential groove," "second circumferential groove," "first inclined width direction groove," and "second inclined width direction groove" refer to grooves having a groove width (opening width) of 2 mm or more, and "sipe" refers to a groove having a sipe width such that a part thereof is closed upon contact, for example, a sipe width of 0.3 mm or more and 0.6 mm or less.

Further, the "depth" of a sipe or shallow groove refers to the maximum depth in a state where the pneumatic tire is mounted on an applicable rim, filled with prescribed internal pressure, and is in an unloaded state.

In the present specification, the "applicable rim" refers to an industrial standard effective in the region where the tire is produced and used, which, in Japan, is the JATMA (the Japan Automobile Tyre Manufacturers Association) JATMA YEAR BOOK, in Europe, the ETRTO (The European Tyre and Rim Technical Organisation) STANDARDS MANUAL, and in the United States, the TRA (The Tire and Rim Association, Inc.) YEAR BOOK, etc., and refers to the approved rim (in the ETRTO STANDARDS MANUAL, "Measuring Rim"; in the TRA YEAR BOOK, "Design Rim") for the applicable size described or to be described in the future in these standards (that is, the "rim" of the above "wheel" includes, in addition to current sizes, sizes that may be included in the above industrial standards in the future. As an example of "sizes to be described in the future," sizes described as "FUTURE DEVELOPMENTS" in the 2013 edition of the ETRTO can be cited). However, in the case of a size not described in the above industrial standards, it refers to a rim having a width corresponding to the bead width of the tire.

Further, the "prescribed internal pressure" refers to the air pressure (maximum air pressure) corresponding to the maximum load capability of a single tire for the applicable size and ply rating described in the above JATMA, etc., and in the case of a size not described in the above industrial standards, the "prescribed internal pressure" refers to the air pressure (maximum air pressure) corresponding to the maximum load capability specified for each vehicle on which the tire is mounted.

Further, the "maximum load" described later refers to the load corresponding to the above maximum load capability.

### (Advantageous Effect)

According to the present disclosure, it is possible to provide a pneumatic tire with improved ice-on grip performance.

### BRIEF DESCRIPTION OF THE DRAWINGS

In the accompanying drawings:
FIG. 1 is a developed view illustrating a tread pattern of a tire according to one embodiment of the present disclosure; and
FIG. 2 is a diagram for explaining an example of arrangement of a communication device.

Hereinafter, embodiments of the present disclosure will be illustrated and described in detail with reference to the drawings.

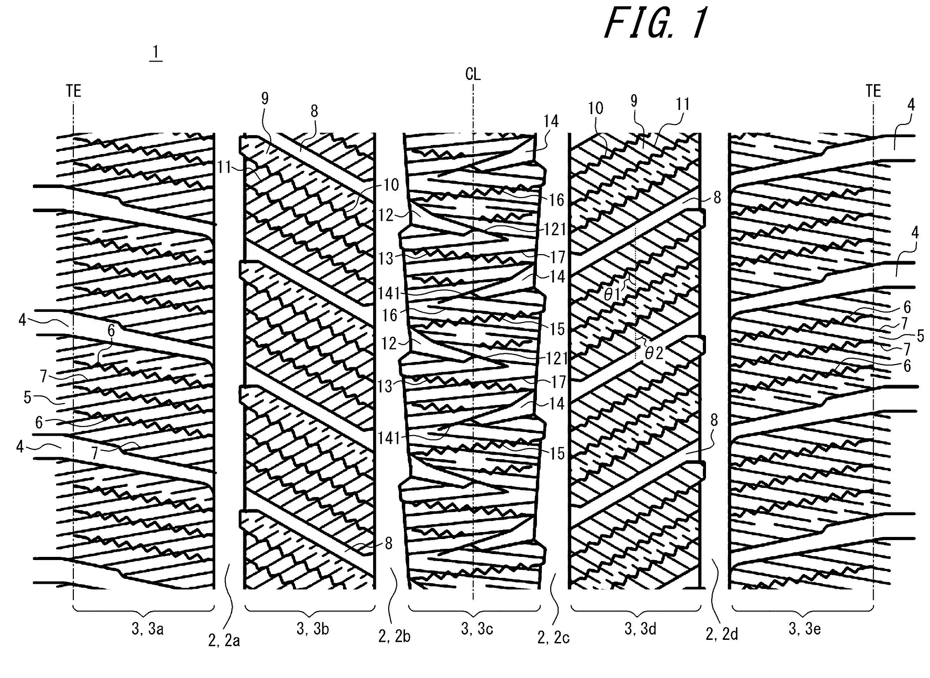

FIG. 1 is a developed view illustrating a tread pattern of a tire according to one embodiment of the present disclosure. The internal structure of the tire is not particularly limited, but in accordance with convention, the tire may be provided with a pair of bead portions, a pair of sidewall portions connected to the bead portions, and a tread portion connected to the sidewall portions. Furthermore, the tire may be provided with a carcass extending toroidally between the pair of bead portions, and a reinforcement layer such as a belt layer on the tire radial outer side of the crown portion of the carcass.

As illustrated in FIG. 1, this tire has a plurality of circumferential grooves 2 extending in the tire circumferential direction on the tread surface 1, and between the circumferential grooves 2, or between the circumferential grooves 2 and the tread edge TE, a plurality of land portions 3 are partitioned. Here, the "tread surface" refers to the surface extending over the entire tire circumferential direction of the contact patch that comes into contact with the road surface when the pneumatic tire is mounted on an applicable rim, inflated to the prescribed internal pressure, and loaded with the maximum load capability.

In the illustrated example, four circumferential grooves 2 are formed, with circumferential grooves 2a and 2b located in one half portion in the tire width direction with the tire equatorial plane CL as the boundary, and circumferential grooves 2c and 2d located in the other half portion in the tire width direction with the tire equatorial plane CL as the boundary. On the other hand, the number of circumferential grooves 2 is not limited to four and may be two or more. In the illustrated example, all of the circumferential grooves 2 extend straight in the tire circumferential direction, but they may also extend in a zigzag-shaped, bent, or curved manner. Further, in the illustrated example, the circumferential grooves 2 extend in the tire circumferential direction (without inclination), but they may also extend at an inclination angle of 5° or less with respect to the tire circumferential direction. The groove width (opening width) of the circumferential grooves 2 may be, for example, 2 mm to 12 mm. The groove depth (maximum depth) of the circumferential grooves 2 may be, for example, 5 mm to 12 mm. In the present embodiment, the circumferential groove 2b is referred to as the "first circumferential groove," and the circumferential groove 2c as the "second circumferential groove."

In the illustrated example, five land portions 3 are formed, with land portions 3a and 3b located in one half portion in the tire width direction with the tire equatorial plane CL as the boundary, land portion 3c located on the tire equatorial plane CL, and land portions 3d and 3e located in the other half portion in the tire width direction with the tire equatorial plane CL as the boundary. On the other hand, the number of land portions 3 corresponds to the number of circumferential grooves 2 and may be three or more.

In the land portions 3a and 3e, which are the outermost land portions in the tire width direction, a plurality of width direction grooves 4 extending in the tire width direction are provided. In the illustrated example, in land portions 3a and 3e, a plurality of width direction grooves 4 are arranged at approximately equal intervals in the tire circumferential direction, thereby partitioning the land portions 3 into a plurality of (substantially same-shaped) blocks 5. Similarly, in land portion 3b adjacent to the inner side in the tire width direction of land portion 3a, and in land portion 3d adjacent to the inner side in the tire width direction of land portion 3e, a plurality of width direction grooves 8 extending in the tire width direction are also provided. In the illustrated example, in land portions 3a and 3e, a plurality of width direction grooves 8 are arranged at approximately equal intervals in the tire circumferential direction, thereby partitioning the land portions 3 into a plurality of (substantially same-shaped) blocks 9.

In the illustrated example, the width direction grooves 4 and 8 all extend straight, but they may also extend in a zigzag-shaped, bent, or curved manner. Further, the width direction grooves 4 and 8 may extend in the tire width direction, or may extend at an inclination angle of 60° or less (or 45° or less, or 30° or less) with respect to the tire width direction. The groove width (opening width) of the width direction grooves 4 and 8 may be, for example, 2 mm to 12 mm. The groove depth (maximum depth) of the width direction grooves 4 and 8 may be, for example, 5 mm to 12 mm. In the illustrated example, the width direction grooves 4 partitioning land portion 3a and the width direction grooves 8 partitioning land portion 3b are located substantially on an extension line, and likewise, the width direction grooves 4 partitioning land portion 3e and the width direction grooves 8 partitioning land portion 3d are located substantially on an extension line. With such a configuration, drainage performance can be further enhanced. On the other hand, the width direction grooves 4 partitioning land portion 3a and the width direction grooves 8 partitioning land portion 3b need not be located substantially on an extension line (even if the virtual extension lines are offset from each other in the tire circumferential direction), and likewise, the width direction grooves 4 partitioning land portion 3e and the width direction grooves 8 partitioning land portion 3d need not be located substantially on an extension line (even if the virtual extension lines are offset from each other in the tire circumferential direction). Further, in the illustrated example, the width direction grooves 4 and 8 located in one half portion in the tire width direction with the tire equatorial plane CL as the boundary and the width direction grooves 4 and 8 located in the other half portion in the tire width direction are inclined in opposite directions in the tire circumferential direction with respect to the tire width direction, but they may also be inclined in the same direction in the tire circumferential direction with respect to the tire width direction.

As described above, in land portions 3a, 3b, 3d, and 3e, a plurality of blocks 5 and 9 are partitioned by a plurality of circumferential grooves 2 extending in the tire circumferential direction and a plurality of width direction grooves 4 and 8 extending in the tire width direction. In the illustrated example, the blocks 5 and 9 are substantially parallelogram-shaped in this planar view, but are not limited to this shape.

As illustrated in FIG. 1, in land portions 3a and 3e (3b and 3d), a plurality of sipes 6 (10) and a plurality of shallow grooves 7 (11) are provided on the surface of blocks 5 (9) so as to extend in mutually opposite directions in the tire width direction with respect to one direction in the tire circumferential direction. The sipes 6 (10) and the shallow grooves 7 (11) intersect each other.

In the illustrated example, three sipes 6 (10) are arranged in each block 5 (9). The number of sipes 6 (10) is not particularly limited. Further, in the illustrated example, the three sipes 6 (10) are arranged at equal intervals in the tire circumferential direction so that the size of the block pieces partitioned by the sipes 6 (10) becomes substantially the same. On the other hand, the sipes 6 (10) need not necessarily be arranged at equal intervals in the tire circumferential direction. In the illustrated example, the sipes 6 (10) are flat-plate sipes and extend linearly in the planar view, but may also extend in a zigzag shape. The sipes 6 (10) may be so-called three-dimensional sipes in which the inner wall surface of the sipe forms an uneven shape along the sipe depth direction. In this example, one end of sipe 6 opens to the circumferential groove and the other end communicates with the tread edge TE, but either one or both ends may terminate within the block 5. Also, sipe 10 opens at both ends to the circumferential groove 2, but either one or both ends may terminate within the block 9.

In the present embodiment, the inclination angle θ1 of the sipes 6 (10) with respect to the tire circumferential direction is greater than 0° and less than 90°. The above inclination angle θ1 is preferably 45° or more, more preferably 60° or more, and even more preferably 75° or more. In this example, the sipes 6 (10) have the same inclination angle with respect to the tire circumferential direction as the width direction grooves 4 (8), but they may be different. Here, the "inclination angle" of the sipe or shallow groove means, in the case where the sipe or shallow groove is not linear in the planar view, the inclination angle with respect to the tire circumferential direction of a virtual line connecting the endpoints. Further, for the sipe and the shallow groove, the measurement is made in the opposite direction in the tire circumferential direction with respect to the tire width direction (see land portion 3d in FIG. 1).

In this example, the sipe depth (maximum depth) of the sipes 6 (10) may be, for example, 5 mm to 8 mm.

The number of shallow grooves 7 (11) is not particularly limited. In the illustrated example, some of the shallow grooves 7 (11) in the block 5 (9) terminate at one end within the block 5 (9). This allows the rigidity of the block 5 (9) to be ensured.

In the present embodiment, the inclination angle θ2 of the shallow grooves 7 (11) with respect to the tire circumferential direction is greater than 0° and less than 90°. The above inclination angle θ2 is preferably 45° or more, more preferably 60° or more, and even more preferably 75° or more.

The groove width (opening width) of the shallow grooves 7 (11) is preferably 0.75 to 1.0 times the sipe width (opening width) of the sipes 6 (10). Although not particularly limited, the groove width (opening width) of the shallow grooves 7 (11) may be, for example, 0.3 mm to 0.4 mm. The groove depth (maximum depth) of the shallow grooves 7 (11) is smaller than the depth (maximum depth) of the sipes 6 (10). The groove depth (maximum depth) of the shallow grooves 7 (11) may be, for example, 0.1 mm to 0.3 mm.

Here, in the present embodiment, the magnitude of the difference between the above inclination angle θ1 and the above inclination angle θ2 is 30° or less (the absolute value of θ1-θ2 is 30° or less). Further, it is preferable that the magnitude of the difference between the above inclination angle θ1 and the above inclination angle θ2 is 15° or less.

In land portions 3a, 3b, 3d, and 3e, since the sipes 6 (10) and the shallow grooves 7 (11) intersect, water can be discharged evenly through the sipes 6 (10) and the shallow grooves 7 (11), thereby improving the drainage performance of the tire.

Next, with respect to land portion 3c, as described above, a land portion 3c partitioned by the first circumferential groove 2b extending in the tire circumferential direction and the second circumferential groove 2c extending in the tire circumferential direction is provided. In land portion 3c, a first inclined width direction groove 12 extending in a first direction inclined with respect to the tire width direction, a second inclined width direction groove 14 extending in a second direction inclined in the opposite direction to the first inclined width direction groove with respect to the tire width direction, a first sipe 13 extending in the first direction, and a second sipe 15 extending in the second direction are formed. In the tire circumferential direction, the first inclined width direction groove 12, a plurality of first sipes 13, the second inclined width direction groove 14, and a plurality of second sipes 15 are repeatedly formed.

In the illustrated example, both the first inclined width direction groove 12 and the second inclined width direction groove 14 extend straight, but they may also extend in a zigzag shape, bent, or curved manner. In the illustrated example, one end of each of the first inclined width direction groove 12 and the second inclined width direction groove 14 communicates with the circumferential groove 2, and the other end terminates within the land portion 3c. Therefore, the land portion 3c is a rib-like land portion that is not completely divided by the first inclined width direction groove 12 and the second inclined width direction groove 14. Thus, one end of the first inclined width direction groove 12 and one end of the second inclined width direction groove 14 terminate within the land portion 3c. On the other hand, the land portion 3c may also be a block-shaped land portion. That is, both ends of the first inclined width direction groove 12 and the second inclined width direction groove 14 may communicate with the first circumferential groove 2b and the second circumferential groove 2c.

Further, it is preferable that the first inclined width direction groove 12 and the second inclined width direction groove 14 extend at an inclination angle of 0° to 45° with respect to the tire width direction. The groove width (opening width) of the first inclined width direction groove 12 and the second inclined width direction groove 14 may be, for example, 2 mm to 12 mm. The groove depth (maximum depth) of the first inclined width direction groove 12 and the second inclined width direction groove 14 may be, for example, 5 mm to 12 mm.

In the illustrated example, at the end of the first inclined width direction groove 12, a linear first sipe portion 121 having a sipe width smaller than the groove width of the first inclined width direction groove 12 is connected. Also, at the end of the second inclined width direction groove 14, a linear second sipe portion 141 having a sipe width smaller than the groove width of the second inclined width direction groove 14 is connected. In the illustrated example, the first inclined width direction groove 12 communicates with the first circumferential groove 2b, one end of the first sipe portion 121 communicates with the first inclined width direction groove 12, and the other end of the first sipe portion 121 terminates within the land portion 3c without communicating with the second circumferential groove 2c. Also, the second inclined width direction groove 14 communicates with the second circumferential groove 2c, one end of the second sipe portion 141 communicates with the second inclined width direction groove 14, and the other end of the second sipe portion 141 terminates within the land portion 3c without communicating with the first circumferential groove 2b.

The sipe width (opening width) of the first sipe portion 121 and the second sipe portion 141 may be, for example, 0.2 mm to 0.4 mm. The sipe depth (maximum depth) of the first sipe portion 121 and the second sipe portion 141 may be, for example, 1 mm to 10 mm. The inclination angle of the first sipe portion 121 and the second sipe portion 141 with respect to the tire width direction may be substantially the same as the inclination angle of the first inclined width direction groove 12 and the second inclined width direction groove 14 with respect to the tire width direction, respectively, but may also be different.

As illustrated in FIG. 1, the first sipe 13 and the second sipe 15 are each arranged at equal intervals in the tire circumferential direction. On the other hand, the first sipe 13 and the second sipe 15 need not necessarily be arranged at equal intervals in the tire circumferential direction. In the illustrated example, the first sipe 13 and the second sipe 15 are flat-plate sipes and extend linearly in the planar view, but may also extend in a zigzag shape. The first sipe 13 and the second sipe 15 may be so-called three-dimensional sipes in which the inner wall surface of the sipe forms an uneven shape along the sipe depth direction. In this example, both ends of the first sipe 13 and the second sipe 15 open to the circumferential groove 2, but either one or both ends may terminate within the land portion 3c.

In the present embodiment, the inclination angle θ3 of the first sipe 13 and the second sipe 15 with respect to the tire circumferential direction is greater than 0° and less than 90°. The above inclination angle θ3 is preferably 45° or more, more preferably 60° or more, and even more preferably 75° or more. In this example, the first sipe 13 and the second sipe 15 may have the same inclination angle with respect to the tire circumferential direction as the first inclined width direction groove 12 and the second inclined width direction groove 14, respectively, but may also be different.

In this example, the sipe depth (maximum depth) of the first sipe 13 and the second sipe 15 may be, for example, 5 mm to 8 mm.

This tire further includes a plurality of first shallow grooves 16, each having a groove depth smaller than the sipe depth of the first sipe 13 and the sipe depth of the second sipe 15, extending in the first direction and intersecting the second sipe 15, and a plurality of second shallow grooves 17, each having a groove depth smaller than the sipe depth of the first sipe 13 and the sipe depth of the second sipe 15, extending in the second direction and intersecting the first sipe 13.

The number of first shallow grooves 16 and second shallow grooves 17 is not particularly limited, but it is preferable that two or more of each are continuously arranged in the tire circumferential direction. In the illustrated example, the first shallow grooves 16 and the second shallow grooves 17 terminate at one end within the land portion 3c. This allows the rigidity of the land portion 3c to be ensured.

In the present embodiment, the inclination angle θ4 of the first shallow grooves 16 and the second shallow grooves 17 with respect to the tire circumferential direction is greater than 0° and less than 90°, respectively. The above inclination angle θ4 is preferably 45° or more, more preferably 60° or more, and even more preferably 75° or more.

The groove width (opening width) of the first shallow grooves 16 and the second shallow grooves 17 is preferably 0.75 to 1.0 times the sipe width (opening width) of the first sipe 13 and the second sipe 15, respectively. Although not particularly limited, the groove width (opening width) of the first shallow grooves 16 and the second shallow grooves 17 may be, for example, 0.3 mm to 0.4 mm, respectively. The groove depth (maximum depth) of the first shallow grooves 16 and the second shallow grooves 17 is smaller than the depth (maximum depth) of the first sipe 13 and the second sipe 15, respectively. The groove depth (maximum depth) of the first shallow grooves 16 and the second shallow grooves 17 may be, for example, 0.1 mm to 0.3 mm, respectively.

Here, the magnitude of the difference between the above inclination angle θ3 and the above inclination angle θ4 is 30° or less (the absolute value of θ3-θ4 is 30° or less). Further, it is preferable that the magnitude of the difference between the above inclination angle θ3 and the above inclination angle θ4 is 15° or less.

Hereinafter, the operational effects of the tire of the present embodiment will be described.

According to the tire of the present embodiment, within the land portion 3c, a plurality of sipes (the first sipe 13 and the second sipe 15) inclined in different directions with respect to the tire width direction are provided. Since the first sipe 13 and the first shallow groove 16 are inclined in opposite directions and intersect, water can be discharged evenly through the first sipe 13 and the first shallow groove 16. Similarly, since the second sipe 15 and the second shallow groove 17 are inclined in opposite directions and intersect, water can be discharged evenly through the second sipe 15 and the second shallow groove 17. As a result, the drainage performance of the tire can be improved.

As described above, according to the tire of the present embodiment, drainage performance can be improved, thereby enhancing ice grip performance.

Here, it is preferable that the first shallow groove 16 and the second shallow groove 17 do not intersect each other. In particular, it is preferable that none of the plurality of first shallow grooves 16 and the plurality of second shallow grooves 17 intersect each other. This is because it is possible to suppress a decrease in the uneven wear resistance of the land portion 3c and the occurrence of chipping, etc., due to a local decrease in rigidity in the portions partitioned by the first shallow groove 16 and the second shallow groove 17.

Further, it is preferable that at least some pairs of the first shallow grooves 16 and the second shallow grooves 17 overlap each other in the tire circumferential direction when projected in the tire width direction (it is preferable that there exist pairs of the first shallow groove 16 and the second shallow groove 17 that overlap each other in the tire circumferential direction when projected in the tire width direction). This is because the density of shallow grooves can be increased, thereby further improving drainage performance.

Further, it is also preferable that the first shallow groove 16 and the second shallow groove 17 are arranged so as to be spaced apart from each other when projected in the tire width direction (it is also preferable that there exist no pairs of the first shallow groove 16 and the second shallow groove 17 that overlap each other in the tire circumferential direction when projected in the tire width direction). This is because it is possible to suppress a decrease in the uneven wear resistance of the land portion 3c and the occurrence of chipping, etc., by preventing the partitioning of small land portions and the resulting local decrease in rigidity.

At least some of the first shallow grooves 16 among the plurality of first shallow grooves 16 preferably communicate with the first circumferential groove 2b or the second circumferential groove 2c, and/or at least some of the second shallow grooves 17 among the plurality of second shallow grooves 17 preferably communicate with the first circumferential groove 2b or the second circumferential groove 2c. This is because drainage performance can be further improved.

At least some of the first shallow grooves 16 among the plurality of first shallow grooves 16 preferably communicate with a plurality of the first sipes 13, and/or at least some of the second shallow grooves 17 among the plurality of second shallow grooves 17 preferably communicate with a plurality of the second sipes 15. This is because drainage performance can be further improved.

It is also preferable that one end of the first inclined width direction groove 12 and one end of the second inclined width direction groove 14 terminate within the land portion. This is because the rigidity of the land portion 3c can be improved.

It is preferable that the first shallow groove 16 does not extend to a position crossing the first inclined width direction groove 12 or the second inclined width direction groove 14. Also, it is preferable that the second shallow groove 17 does not extend to a position crossing the first inclined width direction groove 12 or the second inclined width direction groove 14.

It is preferable that the first shallow groove 16 and the second shallow groove 17 are each arranged so as to avoid the vent pieces (marks) formed in the tread. This is because more efficient drainage can be achieved.

At least a part of the first sipe 13 and the second sipe 15 may be zigzag-shaped in a planar view.

It is preferable to arrange foamed rubber in the tread rubber. Such a configuration can be realized, for example, by forming the cap rubber layer from foamed rubber, that is, rubber having a large number of independent cells inside, and in this way, by forming the cap rubber layer that contacts the road surface from foamed rubber, on-snow performance can be improved. Note that the foamed rubber can be molded by adding a foaming agent to a normal rubber compound and subjecting it to heating and pressing according to the usual tire manufacturing method.

It is preferable that two or more of the first shallow grooves 16 are continuously arranged in the tire circumferential direction. Also, it is preferable that two or more of the second shallow grooves 17 are continuously arranged in the tire circumferential direction.

### [Example of Arrangement of Communication Device]

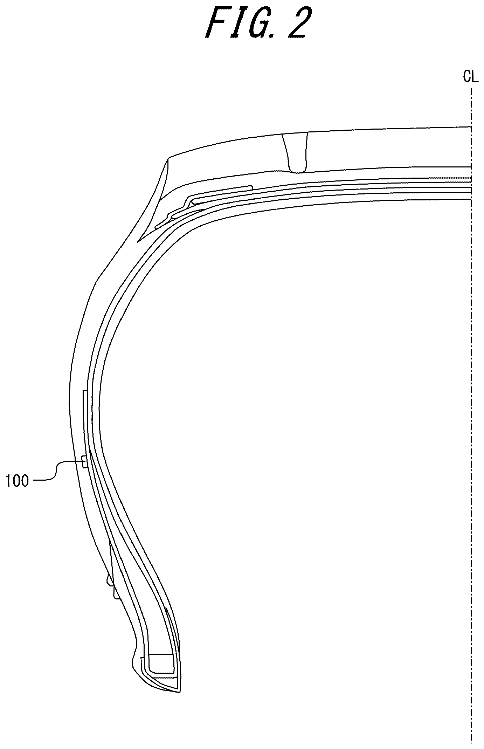

FIG. 2 is a partial cross-sectional view in the tire width direction illustrating one half portion in the tire width direction of a pneumatic tire according to an embodiment of the present disclosure. The tire may be provided with an RF tag as a communication device 100. The RF tag includes an IC chip and an antenna. The RF tag may, for example, be sandwiched and arranged between positions of a plurality of members, either of the same or different types, constituting the tire. By doing so, it becomes easier to attach the RF tag during tire production, and the productivity of tires provided with the RF tag can be improved. In this example, the RF tag may, for example, be sandwiched and arranged between the bead filler and another member adjacent to the bead filler. The RF tag may also be embedded within any of the members constituting the tire. By doing so, compared to the case where it is sandwiched and arranged between a plurality of members constituting the tire, the load applied to the RF tag can be reduced. As a result, the durability of the RF tag can be improved. In this example, the RF tag may, for example, be embedded within a rubber member such as tread rubber or side rubber. It is preferable that the RF tag is not arranged at a position that becomes a boundary between members of different rigidity in the peripheral length direction, which is the direction along the tire outer surface in a cross-sectional view in the tire width direction. By doing so, the RF tag is not arranged at a position where strain is likely to concentrate due to a rigidity step. Therefore, the load applied to the RF tag can be reduced. As a result, the durability of the RF tag can be improved. In this example, it is preferable that the RF tag is not arranged at a position that becomes a boundary between the end of the carcass and a member (such as side rubber) adjacent to the end of the carcass in a cross-sectional view in the tire width direction. The number of RF tags is not particularly limited. The tire may be provided with only one RF tag, or may be provided with two or more RF tags. Here, as an example of the communication device, an RF tag is described as an example, but a communication device different from an RF tag may also be used.

The RF tag may, for example, be arranged in the tread portion of the tire. By doing so, the RF tag is not damaged by a side cut of the tire. The RF tag may, for example, be arranged in the tread center portion in the tire width direction. The tread center portion is a position in the tread portion where deflection is less likely to concentrate. By doing so, the load applied to the RF tag can be reduced. As a result, the durability of the RF tag can be improved. Furthermore, it is possible to suppress the occurrence of differences in communication with the RF tag from both outer sides of the tire in the tire width direction. In this example, the RF tag may, for example, be arranged within a range of 1/2 of the tread width centered on the tire equatorial plane in the tire width direction. The RF tag may, for example, be arranged at the tread edge in the tire width direction. When the position of the reader communicating with the RF tag is predetermined, the RF tag may, for example, be arranged at one tread edge on the side closer to the reader. In this example, the RF tag may, for example, be arranged within a range of 1/4 of the tread width, with the tread edge as the outer end, in the tire width direction.

The RF tag may, for example, be arranged on the tire inner cavity side relative to the carcass including one or more carcass plies spanning between the bead portions. By doing so, the RF tag becomes less likely to be damaged by impacts from outside the tire, side cuts, or nail punctures. As one example, the RF tag may be arranged in close contact with the surface of the carcass on the tire inner cavity side. As another example, when there is another member on the tire inner cavity side relative to the carcass, the RF tag may, for example, be arranged between the carcass and another member located on the tire inner cavity side relative to the carcass. As an example of another member located on the tire inner cavity side relative to the carcass, an inner liner forming the tire inner surface may be mentioned. As another example, the RF tag may be attached to the tire inner surface facing the tire inner cavity. By configuring the RF tag to be attached to the tire inner surface, attachment of the RF tag to the tire and inspection or replacement of the RF tag can be easily performed. That is, the attachability and maintainability of the RF tag can be improved. Furthermore, by attaching the RF tag to the tire inner surface, compared to a configuration in which the RF tag is embedded in the tire, it is possible to prevent the RF tag from becoming a nucleus of tire failure. Furthermore, when the carcass includes a plurality of carcass plies and there is a position where a plurality of carcass plies are stacked, the RF tag may be arranged between the stacked carcass plies.

The RF tag may, for example, be arranged on the outer side in the tire radial direction relative to the belt including one or more belt plies in the tread portion of the tire. As one example, the RF tag may be arranged in close contact with the belt on the outer side in the tire radial direction relative to the belt. As another example, when a belt reinforcement layer is provided, the RF tag may be arranged in close contact with the belt reinforcement layer on the outer side in the tire radial direction relative to the belt reinforcement layer. As another example, the RF tag may be embedded in the tread rubber on the outer side in the tire radial direction relative to the belt. By arranging the RF tag on the outer side in the tire radial direction relative to the belt in the tread portion of the tire, communication with the RF tag from the outside of the tire in the tire radial direction is less likely to be hindered by the belt. Therefore, communication with the RF tag from the outside of the tire in the tire radial direction can be improved. Furthermore, the RF tag may, for example, be arranged on the inner side in the tire radial direction relative to the belt in the tread portion of the tire. By doing so, the outer side in the tire radial direction of the RF tag is covered by the belt, so the RF tag becomes less likely to be damaged by impacts or nail punctures from the tread surface. As one example, the RF tag may be arranged between the belt and the carcass located on the inner side in the tire radial direction relative to the belt in the tread portion of the tire. Furthermore, when the belt includes a plurality of belt plies, the RF tag may be arranged between any two belt plies in the tread portion of the tire. By doing so, the outer side in the tire radial direction of the RF tag is covered by one or more belt plies, so the RF tag becomes less likely to be damaged by impacts or nail punctures from the tread surface.

The RF tag may, for example, be arranged at a position of the sidewall portion or bead portion of the tire. The RF tag may, for example, be arranged at one sidewall portion or one bead portion on the side closer to a reader capable of communicating with the RF tag. By doing so, communication between the RF tag and the reader can be enhanced. As one example, the RF tag may be arranged between the carcass and the side rubber, or between the tread rubber and the side rubber. The RF tag may, for example, be arranged between the position of the tire maximum width and the position of the tread surface in the tire radial direction. By doing so, compared to a configuration in which the RF tag is arranged on the inner side in the tire radial direction relative to the position of the tire maximum width, communication with the RF tag from the outside of the tire in the tire radial direction can be enhanced. The RF tag may, for example, be arranged on the inner side in the tire radial direction relative to the position of the tire maximum width. By doing so, the RF tag is arranged near the bead portion with high rigidity. Therefore, the load applied to the RF tag can be reduced. As a result, the durability of the RF tag can be improved. As one example, the RF tag may be arranged at a position adjacent to the bead core in the tire radial direction or tire width direction. The vicinity of the bead core is less likely to concentrate strain. Therefore, the load applied to the RF tag can be reduced. As a result, the durability of the RF tag can be improved. In particular, it is preferable that the RF tag is arranged on the inner side in the tire radial direction relative to the position of the tire maximum width and on the outer side in the tire radial direction relative to the bead core of the bead portion. By doing so, the durability of the RF tag can be improved, and communication between the RF tag and the reader is less likely to be hindered by the bead core, thereby enhancing the communication performance of the RF tag. Furthermore, when the side rubber is composed of a plurality of rubber members of the same or different types adjacent in the tire radial direction, the RF tag may be sandwiched and arranged between the plurality of rubber members constituting the side rubber.

The RF tag may be sandwiched and arranged between the bead filler and another member adjacent to the bead filler. By doing so, the RF tag can be arranged at a position where strain is less likely to concentrate due to the arrangement of the bead filler. Therefore, the load applied to the RF tag can be reduced. As a result, the durability of the RF tag can be improved. The RF tag may, for example, be sandwiched and arranged between the bead filler and the carcass. The portion of the carcass that sandwiches the RF tag together with the bead filler may be located on the outer side in the tire width direction relative to the bead filler, or may be located on the inner side in the tire width direction. When the portion of the carcass that sandwiches the RF tag together with the bead filler is located on the outer side in the tire width direction relative to the bead filler, the load applied to the RF tag due to impacts or damage from the outside of the tire in the tire width direction can be further reduced. As a result, the durability of the RF tag can be further improved. Furthermore, the bead filler may include a portion arranged adjacent to the side rubber. In such a case, the RF tag may be sandwiched and arranged between the bead filler and the side rubber. Furthermore, the bead filler may include a portion arranged adjacent to the rubber chafer. In such a case, the RF tag may be sandwiched and arranged between the bead filler and the rubber chafer.

The RF tag may, for example, be sandwiched and arranged between the rubber chafer and the side rubber. By doing so, the RF tag can be arranged at a position where strain is less likely to concentrate due to the arrangement of the rubber chafer. Therefore, the load applied to the RF tag can be reduced. As a result, the durability of the RF tag can be improved. The RF tag may, for example, be sandwiched and arranged between the rubber chafer and the carcass. By doing so, the load applied to the RF tag due to impacts or damage from the rim can be reduced. Therefore, the durability of the RF tag can be improved.

The RF tag may be sandwiched and arranged between the wire chafer and another member adjacent to the wire chafer on the inner or outer side in the tire width direction. By doing so, the position of the RF tag becomes less likely to fluctuate during tire deformation. Therefore, the load applied to the RF tag during tire deformation can be reduced. As a result, the durability of the RF tag can be improved. The other member adjacent to the wire chafer on the inner or outer side in the tire width direction may, for example, be a rubber member such as a rubber chafer. Furthermore, the other member adjacent to the wire chafer on the inner or outer side in the tire width direction may, for example, be the carcass.

A belt reinforcement layer may further be provided on the outer side in the radial direction of the belt. For example, the belt reinforcement layer may be formed by continuously spirally winding cords made of polyethylene terephthalate in the tire circumferential direction. Here, the cord may be subjected to adhesive treatment under a tension of 6.9x10⁻² N/tex or more, and may have an elastic modulus at a load of 29.4 N measured at 160 °C of 2.5 mN/dtex·% or more. Furthermore, the belt reinforcement layer may be arranged so as to cover the entire belt or only both end portions of the belt. Furthermore, the winding density per unit width of the belt reinforcement layer may differ depending on the position in the width direction. By doing so, it is possible to reduce road noise and flat spots without reducing high-speed durability.

### REFERENCE SIGNS LIST

1: tread surface,
2: circumferential groove
2b: first circumferential groove, 2c: second circumferential groove,
3: land portion,
4: width direction groove,
5: block,
6: sipe,
7: shallow groove,
8: width direction groove,
9: block,
10: sipe,
11: shallow groove,
12: first inclined width direction groove,
13: first sipe,
14: second inclined width direction groove,
15: second sipe,
16: first shallow groove,
17: second shallow groove,
100: communication device

## Claims

1. A tire provided with a land portion partitioned by a first circumferential groove extending in a tire circumferential direction and a second circumferential groove extending in the tire circumferential direction, wherein the land portion is provided with:
a first inclined width direction groove extending in a first direction inclined with respect to a tire width direction,
a second inclined width direction groove extending in a second direction inclined in the opposite direction to the first inclined width direction groove with respect to the tire width direction,
a first sipe extending in the first direction, and a second sipe extending in the second direction,
wherein, in the tire circumferential direction, the first inclined width direction groove, a plurality of the first sipes, the second inclined width direction groove, and a plurality of the second sipes are repeatedly formed,
wherein a plurality of first shallow grooves, each having a groove depth smaller than a sipe depth of the first sipe and a sipe depth of the second sipe, extend in the first direction and intersect the second sipe, and
a plurality of second shallow grooves, each having a groove depth smaller than the sipe depth of the first sipe and the sipe depth of the second sipe, extending in the second direction and intersecting the first sipe, are further provided.

2. The tire according to claim 1, wherein the first shallow grooves and the second shallow grooves do not intersect each other.

3. The tire according to claim 1 or 2, wherein at least some pairs of the first shallow grooves and the second shallow grooves overlap each other in the tire circumferential direction when projected in the tire width direction.

4. The tire according to claim 1 or 2, wherein the first shallow grooves and the second shallow grooves are arranged so as to be spaced apart from each other when projected in the tire width direction.

5. The tire according to any one of claims 1 to 4, wherein at least some of the plurality of first shallow grooves communicate with the first circumferential groove or the second circumferential groove, or at least some of the plurality of second shallow grooves communicate with the first circumferential groove or the second circumferential groove.

6. The tire according to any one of claims 1 to 5, wherein at least some of the plurality of first shallow grooves communicate with a plurality of the first sipes, or at least some of the plurality of second shallow grooves communicate with a plurality of the second sipes.

7. The tire according to any one of claims 1 to 6, wherein one end of the first inclined width direction groove and one end of the second inclined width direction groove terminate within the land portion.
